# EUROPEAN PATENT APPLICATION

(11) **EP 2 281 441 A1**
(43) Date of publication of application: **09.02.2011**
(21) Application number: 10192063.5
(22) Date of filing: 05.04.2007
(51) Int. Cl.: A01G 9/02, B29C 45/37

(54) **Method of manufacturing a plastic pot with material-saving wall construction**

(30) Priority: 07.04.2006 NL 1031540
(62) Divisional of application: 07075262.1
(71) Applicant: Handelsonderneming Van Krimpen B.V., 4731 CZ Oudenbosch (NL)
(72) Inventor: Wilschut, Maarten Jacob, 4731 CZ, Oudenbosch (NL)
(74) Representative: Grootscholten, Johannes A.M.

(57) **Abstract**

The invention relates to a method of manufacturing a plastic pot (1), such as a flowerpot, forming a base (2) and a wall (3) manufactured from a curing material in a moulding process such as injection-moulding, the wall extending from the bottom edge of the base and ending in a pot rim, wherein the wall has a number of channels (10) arranged distributed over the periphery and extending in the direction from the bottom edge to the pot rim, characterized by defining a nominal wall thickness of the wall (2) based on the moulding process, and setting the wall thickness between the channels to be at least equal to nominal, wherein the nominal wall thickness is such that, during production, skewing of an inner mould part is prevented, and setting the wall thickness at the channels to be less than nominal. Furthermore, the inventions relates to a mould for use in the method of injection moulding of a pot.

## Description

The invention relates to a method of manufacturing a plastic pot in accordance with the preamble of claim 1, and a mould for use in the method of producing such a pot.

Such pots are generally known and, as flowerpot, are for instance used for cultivating plants therein.

The document WO-2002/096187 discloses a method as in the preamble of claim 1.

In this application the pot is sold with the plant cultivated therein. The pot is discarded by the end user as waste. Such pots are therefore intended in principle for once-only use.

It is therefore important to produce plastic pots of the present type at the lowest possible cost price. This is achieved according to the invention with all the features of claim 1 as a whole. It is hereby possible to manufacture the pot and in particular the wall thereof with less material than in usual similar pots.

A significant problem in reducing the wall thickness of pots manufactured by injection moulding is that during the injection moulding the plastic material penetrates only at a very high pressure into the whole of the mould cavity of the mould used here. Owing to this high pressure the core of the mould can be pressed out of its axial position, with the result that the wall thickness on one side of the pot becomes greater than on the opposite side, wherein the thus created minimum wall thickness is too small to still enable use of the pot.

In the known art a nominal wall thickness is thus employed at which the core of the mould can be held in the desired axial position.

Owing to the invention, when executing the method according to the appended claims, the plastic material flows in fluid form into the mould cavity in properly uniform manner between the wider portions which are defined by the channels and which define a greater wall thickness than at the position of the channels, i.e. at least the nominal wall thickness. The pressure of the fluid material hereby remains within limited bounds, and the core is not pressed askew. It is thus possible to manufacture a plastic pot of the present type by injection moulding with a material-saving in the order of magnitude of as much as 20%. In view of the far-reaching extent to which the methods of manufacturing such pots of the present type have been developed, this is an exceptionally large saving.

The channels are suitably formed lying mutually adjacently and at least almost connecting. A maximum saving is achieved in this way.

According to a further development, the plastic pot according to the invention comprises a wall which consists of a number of mutually connecting sections substantially parallel to the base. The section furthest removed from the base forms for instance the per se known pot rim.

Channels are preferably formed in at least one of the sections in such a pot. This can for instance be the section connecting directly onto the base. The other section or sections have a relatively limited height and in the mould adjoin the foot of the core, so that pressing askew of the core by high pressure will not occur in this area.

These sections furthest removed from the base can then be moulded in reliable manner with a small wall thickness. Strengthening edges or ribs will of course be applied in order to impart sufficient rigidity to the pot.

It is also possible to provide all sections of the pot wall with channels. These channels, or rather the parts lying therebetween, form stiffening ribs which impart the desired stiffness to the wall.

In a pot of average size, for instance a pot of 12 cm, the wall thickness between the channels can amount substantially to 0.5 mm. The wall thickness in the channels can here favourably amount substantially to 0.3 mm.

If in a preferred embodiment the channels are formed only on the inner side of the pot, they are hardly visible. The appearance of the pot then differs hardly at all from that of a standard pot.

The invention likewise relates to and provides a mould for use in a method of manufacturing pots by injection moulding of a pot according to claim 8. These ridges of the mould for use in the method form the channels during injection moulding of the pot.

The ridges are preferably defined between grooves arranged in the core. These grooves can have a part-circular profile in that they are arranged in the wall of the core with for instance a cylindrical milling cutter or the like.

The invention will be further elucidated in the following description with reference to the accompanying figures.
Figure 1 shows a perspective view at an angle from above of a pot according to an embodiment of the invention.
Figure 2 shows a perspective view at an angle from below of the pot of figure 1.
Figure 3 shows a partial section through the wall of the pot of figures 1 and 2.
Figure 4 shows a view corresponding with Figure 2 of another embodiment of the pot according to the invention.
Figure 5 shows a perspective view from above of the pot of Figure 4.

The pot 1 shown in the figures has the form of a per se known plastic flowerpot for cultivating plants. Pot 1 comprises a base 2 and a wall 3 extending from the edge thereof.

Pot wall 3 ends in a pot rim 9.

In the exemplary embodiment shown here pot wall 3 consists of three sections 4, 5 and 6. Upper section 6 forms a per se known, substantially cylindrical flange of the pot.

Base 2 of pot 1 is provided in the usual manner with drainage openings 7 and border strips 8 which can support the pot on a surface, wherein base 2 is located a short distance from this surface.

On the inner side of pot 1 wall 3 is provided with a number of channels 10 arranged distributed over the periphery and extending in the direction from the edge of base 2 to pot rim 9. The wall thickness at the position of these channels 10 is very limited so that the total use of material for the wall of the pot is considerably lower than for a pot with a continuous wall thickness which, because of the described problem with the mould core being pressed askew, cannot be smaller than the wall thickness at the position of portions 11 between channels 10.

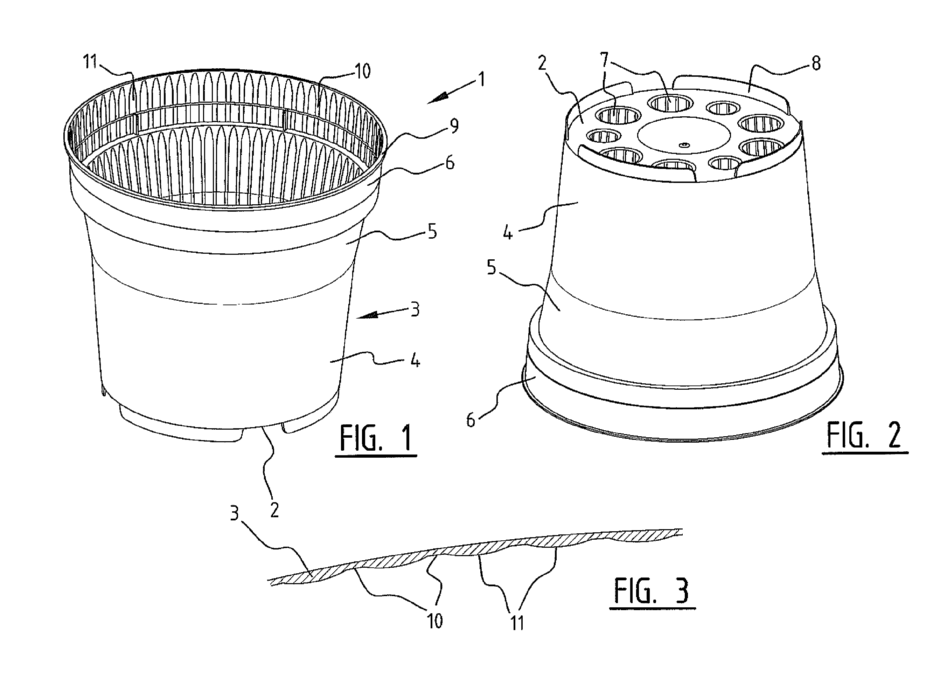

As shown particularly in figure 1, channels 10 are formed lying mutually adjacently and at least almost connecting in inner wall 3.

In the exemplary embodiment shown here the portions 11 between channels 10 have a part-circular boundary surface which is obtained in that corresponding grooves are cut or arranged in a like manner in the wall of the core of the mould with which the pot is manufactured.

In the embodiment shown here the wall thickness between the channels at the position of reference numeral 11 is substantially 0.5 mm, while that of the channels amounts substantially to 0.3 mm. A material-saving is thus achieved in the order of magnitude of 20%, while the appearance of the pot and the utility, i.e. the rigidity and the like, are essentially not adversely affected.

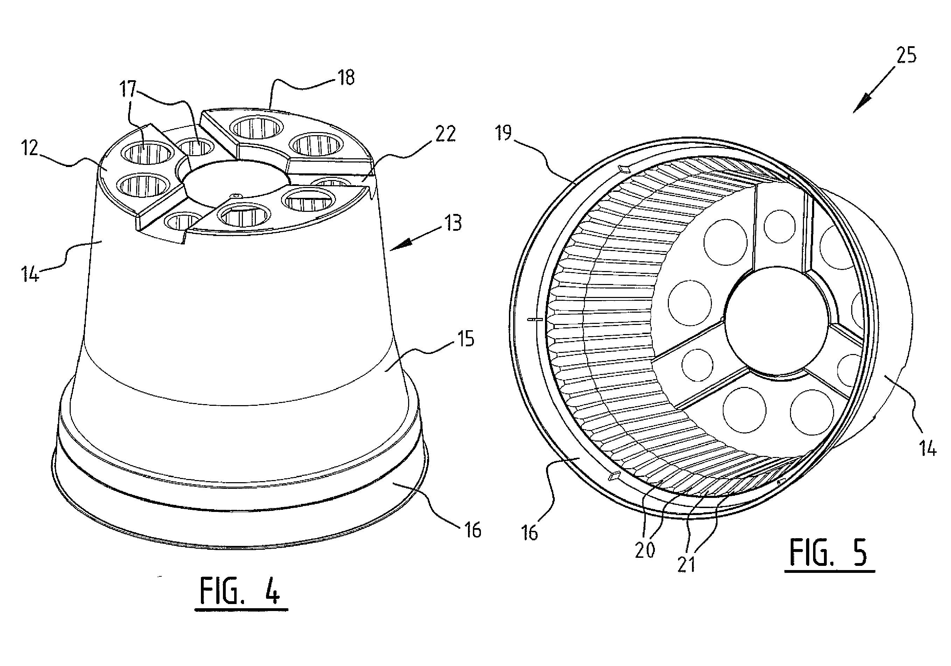

In Figures 4 and 5 the elements corresponding with those shown in Figures 1 and 2 are designated with reference numeral increased by 10 relative to these corresponding elements.

Pot 25 of Figures 4 and 5 has a differently formed base 12. This base 12 is provided with three recessed portions 22 which impart a greater stiffness to base 12, whereby the wall thickness of the base can, if desired, also be small.

In this embodiment the section 16 of the pot rim is further free of the channels on the inner side so that, when a plant is placed in the pot, it is not possible to discern from the pot rim protruding above the potting compost that the pot according to this embodiment is embodied differently from the usual pots.

It will be apparent that the mould according to the invention has a core which defines the inner surface of pot 1 and which carries on its surface defining the inner wall of the pot a number of ridges arranged uniformly over the periphery thereof. These ridges form channels 10.

These ridges are formed in the wall of the core between grooves which are arranged in this wall and which preferably have a part-circular profile as already elucidated with reference to figure 3.

The invention is not limited to the only embodiment shown in the figures, but can be applied for any plastic pot where it is desired to achieve a very small effective wall thickness with a great uniformity over the periphery of the pot. A high-quality product can thus be formed with a minimum use of material.

## Claims

1. A method of manufacturing a plastic pot (1), such as a flowerpot, comprising:
- forming a base (2) and a wall (3) manufactured from a curing material in a moulding process such as injection-moulding, the wall extending from the bottom edge of the base and ending in a pot rim, wherein the wall has a number of channels (10) arranged distributed over the periphery and extending in the direction from the bottom edge to the pot rim, **characterized by**
- defining a nominal wall thickness of the wall (2) based on the moulding process,
- setting the wall thickness between the channels to be at least equal to nominal, wherein the nominal wall thickness is such that, during production, skewing of an inner mould part is prevented, and
- setting the wall thickness at the channels to be less than nominal.

2. The method of forming a plastic pot as claimed in claim 1, wherein the channels (10) are formed lying mutually adjacently and at least almost connecting.

3. The method of forming a plastic pot as claimed in claim 1 or 2, wherein the wall comprises a number of mutually connecting sections substantially parallel to the base, and the channels (10) are formed in at least one of the sections.

4. The method of forming a plastic pot as claimed in any of the foregoing claims, wherein the wall thickness between the channels amounts substantially to 0.5 mm.

5. The method of forming a plastic pot as claimed in any of the foregoing claims, wherein the wall thickness in the channels (10) amounts substantially to 0.3 mm.

6. The method of forming a plastic pot as claimed in any of the foregoing claims, wherein the channels (10) are formed on the inner side of the pot.

7. The method of forming a plastic pot as claimed in any of the foregoing claims, wherein the wall between two adjacent channels has in cross-section a part-circular boundary surface.

8. A mould for use in the method of injection moulding of a pot as claimed in any of the foregoing claims, comprising
- a first mould part with a mould cavity defining the outer side of the pot,
- a second mould part with a core defining the inner side of the pot,
- at least one gate opening at the position of a wall part of the mould cavity or the core defining the base,
wherein the core carries on its surface defining the inner wall of the pot a number of ridges distributed uniformly over the periphery thereof, for forming channels (10) in the pot as defined in claim 1.

9. The mould as claimed in claim 8, wherein the ridges are formed between grooves arranged in the core.

10. The mould as claimed in claim 9, wherein the grooves have a part-circular profile.
